(19) Europäisches Patentamt
European Patent Office
Office européen des brevets

(11) **EP 0 466 502 B1**

(12) **EUROPEAN PATENT SPECIFICATION**

(45) Date of publication and mention
of the grant of the patent:
**18.12.1996  Bulletin 1996/51**

(51) Int Cl.[6]: **G11B 5/60**

(21) Application number: **91306340.0**

(22) Date of filing: **12.07.1991**

(54) **Head slider for magnetic disk drive device**

Kopf-Gleitkörper für eine Magnetplatten-Antriebsvorrichtung

Patin pour tête pour dispositif d'entraînement de disque magnétique

(84) Designated Contracting States:
**DE FR GB**

(30) Priority: **13.07.1990  JP  184082/90**
**17.06.1991  JP  144852/91**

(43) Date of publication of application:
**15.01.1992  Bulletin 1992/03**

(73) Proprietor: **FUJITSU LIMITED**
**Kawasaki-shi, Kanagawa 211 (JP)**

(72) Inventor: **Yoneoka, Seizi**
**Aiko-gun, Kanagawa 243-01 (JP)**

(74) Representative:
**Fane, Christopher Robin King et al**
**HASELTINE LAKE & CO.**
**Hazlitt House**
**28 Southampton Buildings**
**Chancery Lane**
**London, WC2A 1AT (GB)**

(56) References cited:
**EP-A- 0 361 658**          **US-A- 4 700 248**
**US-A- 4 984 114**

- **PATENT ABSTRACTS OF JAPAN, vol. 8, no. 163 (P-290)[1600], 27th July 1984; & JP-A-59 058 661**
- **PATENT ABSTRACTS OF JAPAN, vol. 2, no. 125 (E-78)[7461], 20th October 1978; & JP-A-53 091 716**
- **PATENT ABSTRACTS OF JAPAN, vol. 3, no. 30 (E-97)[89], 13th March 1979; & JP-A-54 008 514**
- **PATENT ABSTRACTS OF JAPAN, vol. 9, no. 250 (P-394)[1973], 8th October 1985; & JP-A-60 101 781**

## Description

The present invention relates to a magnetic disk drive device comprising a head slider mounted therein, for example to a floating head slider used with a magnetic head for writing data to and reading data from a rotating magnetic record disk.

Generally, a magnetic disk drive device has a magnetic head which floats at small distance (flying height) above a record disk surface. To achieve a higher recording density than is normally possible with prior devices of this kind, the flying height should be reduced. An increase in access speed is also needed to shorten the data search time. However, such an increase would cause a large inertial moment in the direction of access to be exerted on the magnetic head and its head slider. Thus, a low-flying head slider with enhanced floating stability is desired.

The peripheral speed of rotation of the disk, driven to rotate within the disk drive device, is different at a radially inner region of the disk from that at the radially outer edge of the disk, and therefore it is desirable for the flying height of such a slider to fluctuate by only a small amount as the peripheral speed varies across the disk.

One previously-considered example of floating head slider for a disk drive device is disclosed in United States Patent no. 4,734,803. The magnetic disk drive system concerned employs a tapered flat plate head slider that includes a pair of side rails, each of which has a tapered section formed at a leading end portion thereof.

The side rails define a recess therebetween, and provide a pneumatic bearing effect by generating positive pressure along an axis of a flow of air entrained by the rotating magnetic disk. This positive pressure is highest at the upstream (leading) end of the tapered section. The recess is wide enough so that it does not function as a pneumatic bearing. The slider is biased by a spring load on the back thereof so that the magnetic head remains in contact with the magnetic disk, at a predetermined position thereon, while in an inoperative state in a contact start and stop (CSS) system. When the magnetic disk starts to rotate, the slider slides on the disk and is lifted at its leading end by the air flow generated by this rotation and then begins to float over the disk. This construction reduces the possibility that the slider will drop onto the disk, and such a slider has acceptable stable flying characteristics.

The construction of such a flat head slider, in which a floating force is generated at tapered sections, makes it difficult to reduce or lower the flying height thereof. Furthermore, the presence of the tapered sections leads to a possibility of compression of floating gas within the magnetic disk drive enclosure, which could cause deposition of such gas onto the disk during operation, and thereby cause the head to crash.

Another previously-considered floating head slider has a recess producing a negative pressure effect that generates a drawing force (suction force). In such a negative pressure type head slider, the recess has a tapered surface, or as an alternative, a stepped configuration, the depth of the recess increasing from the air inlet side to the air outlet side, thus generating a drawing force. The negative pressure region formed within the recess, and generating the drawing force on the slider, serves to provide a relatively stable flying height regardless of variations of the peripheral speed of the magnetic disk.

In the above-mentioned negative pressure type head slider, however, organic vapour in the device tends to accumulate on the tapered sections or on the front end face of the step structure. Also, in the stepped configuration, floating gas tends to be deposited in the region downstream of the step, owing to adiabatic expansion. Furthermore, if such a negative pressure type head slider is coupled with a rotary type positioner which is suitable for making the device compact, a change in angle of the rotary type positioner causes a yawing of the slider which in turn brings about variation in the distribution of the negative pressure produced by the negative pressure type head slider. Such variation can cause a significant amount of rolling, which in the worst case could cause the slider to drop down on to the disk.

One way of reducing or lowering the flying height is to narrow the width of each of the side rails. however, when the widths of the rails are reduced, the surface pressure per unit area on the rail section is increased, which lowers the strength of the CSS. In the case of a generally utilized positive pressure head slider, if the depression force is maintained at a constant value, to maintain the ability to withstand external disturbances, the rail width can be narrowed in proportion to 0.033% of the power of the flying height. For example, when the flying height is halved, the surface pressure is increased by 60%. As a countermeasure this problem, a flat plate type head slider not having the tapered section can be used, but since the centre of action of the pressure (floating force) of the air flow over such a flat plate type head slider is offset towards the downstream end thereof, the loading point also must be offset to coincide with this centre of action.

In current high performance devices designed to provide high-speed access, however, the loading point should ideally be located in the vicinity of the centre of the slider (position of centre of gravity) to avoid yawing of the slider, during an access operation, due to high acceleration thereof in the access direction.

Therefore, even with a flat plate type head slider not provided with the tapered sections, it is difficult to realise a high performance device that will provide a satisfactorily low flying height and desirably high speed access.

According to the present invention, there is provided a magnetic disk drive comprising a floating head slider operatively mounted therein for supporting a magnetic read/write head in an operative disposition relative to a recording surface of a rotating magnetic record disk in a magnetic disk drive device, so as to be held away from that surface by pressure of air entrained by the rotating disk and flowing between the said recording surface and a floating surface of the slider, which floating surface faces the said recording surface when the slider is in use and extends, in the direction of flow of such air, from an inlet end edge of the slider to an outlet end edge thereof, wherein the said floating surface has the form of either a flat base surface or a surface slightly conved in the direction of the air flow, so as to appear convex when the slider is viewed in side elevation, having thereon a pair of side rails, each of which rails has a floating force generating surface that faces away from the said base surface and extends from the said inlet end edge to the said outlet end edge of the slider; characterised in that each of the said side rails has a leading end part that increases gradually in width, from the said inlet end edge towards the said outlet end edge, followed by a further part that decreases in width towards the said outlet end edge, so that the said floating surface has a shallow recess, defined between the two side rails, having a leading end portion, that reduces gradually in width from the said inlet end edge towards the said outlet end edge, and a further portion that increases gradually in width towards the said outlet end edge so as to form a negative force generating region of the floating surface.

In a head slider embodying the present invention, a sufficient drawing force can be generated by a recess having a depth of approximately 1 to 2 $\mu$m. Further, since the floating force increases in proportion to the third power of the side rail width, if an additional rail having a different configuration from that of the side rails is provided between the side rails, in the vicinity of the inlet end edges of the slider, this can serve to limit the generated floating force while maintaining the widths of the side rails, at the air inlet end of the slider, that are necessary to ensure that an appropriate negative drawing force is generated in the recess.

Reference will now be made, by way of example, to the accompanying drawings, in which:

Figs. 1 to 3 are perspective views showing previously-proposed negative pressure type head sliders;

Fig. 4 is a graph showing the relationship between a depth of a recess in the previously-proposed flat type head slider of Fig. 3 and the floating force and drawing force;

Fig. 5 is a perspective view of a previously-considered floating head slider;

Fig. 6 is an underneath plan view showing dimensions of the slider of Fig. 5;

Fig. 7 is a graph showing relationships between the depth of a recess of the head slider of Fig. 6 and a floating force and a drawing force;

Fig. 8A shows diagrammatically the head slider of Fig. 5 in side elevation;

Fig. 8B is a graph showing forces exerted on the slider of Fig. 8A;

Fig. 8C shows schematically the forces on the slider of Fig. 8A;

Fig. 9 is a perspective view of a first slider embodying the present invention;

Fig. 10 is a perspective view of a second slider embodying the present invention;

Fig. 11 is a graph showing relationships between flying height of the slider of Fig. 10 and depression force, positive pressure and negative pressure;

Fig. 12 is a graph showing the relationship between flying height of a crown-type slider having side rails configured as illustrated in Fig. 10, and depression force, positive pressure and negative pressure;

Fig. 13 is a graph showing variation of flying height with peripheral speed of a slider having side rails as shown in Fig. 10, using the depth of a recess thereof as a parameter;

Fig. 14 illustrates air flow at a yawing angle of 10° through a slider having side rails as shown in Fig. 10;

Fig. 15 illustrates pressure distribution over a slider, having side rails as shown in Fig. 10, at a yawing angle of 0°;

Fig. 16 illustrating pressure distribution over a slider, having side rails as shown in Fig. 10, at a yawing angle of 10°;

Fig. 17 is a graph showing variations of flying height relative to yawing angle of a crown-type slider having side rails as shown in Fig. 10;

Fig. 18 is an underneath plan view showing an example of the dimensions of a crown-type slider, with side rails as shown in Fig. 10, having the characteristics shown in Fig. 17;

Fig. 19 is an underneath plan view of a third slider embodying the present invention;

Fig. 20 is an underneath plan view illustrating a first modification of an embodiment of the present invention;

Fig. 21 is an underneath plan view illustrating a second modification of an embodiment of the present invention;

Fig. 22 is a perspective view illustrating the application of the said first modification to the slider of Fig. 9; and

Fig. 23 is a perspective view illustrating the application of the said second modification to the slider of Fig. 10.

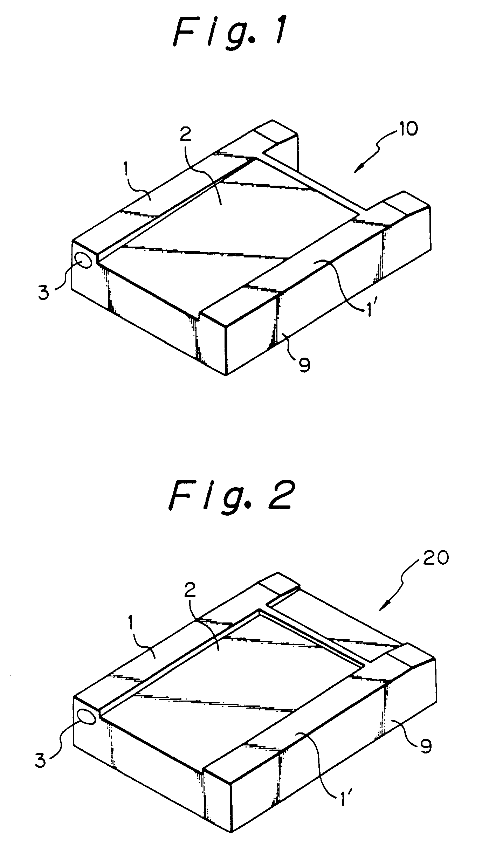

Figures 1 and 2 illustrate two types of negative pressure head sliders 10 and 20. The slider of Figure 1 generates a negative (drawing) force by the use of an inclined recess 2 defined between side rails 1 and 1' provided on a base surface of a body portion 9 as shown in Fig. 1. This base surface faces the recording surface of a magnetic disk when the slider is in use. The slider of Figure 2 generates such a negative (drawing) force by means of a stepped recess 2, as shown in Fig. 2. The depth of the recess in the slider of Fig. 1 increases from the air inlet side (leading end) to the air outlet side (trailing end). In Figs. 1 and 2, reference numeral 3 denotes a magnetic head provided on the trailing end of the body portion 9.

As discussed previously, such constructions of previously-proposed negative pressure head sliders 10 and 20 are defective because when they are used in a magnetic disk drive device, organic vapour flowing within the device tends to accumulate on the inclined bottom surface or the front side of the step, and floating gas tends to be deposited at the downstream side of the step. The accumulation and deposition of organic vapour is one cause of head crashing. Furthermore, these conventional negative pressure head sliders 10 and 20 suffer from a variation of the distribution of the negative pressure, associated with a variation in yawing angle, and so it can be difficult to combine such sliders satisfactorily with rotary type positioners.

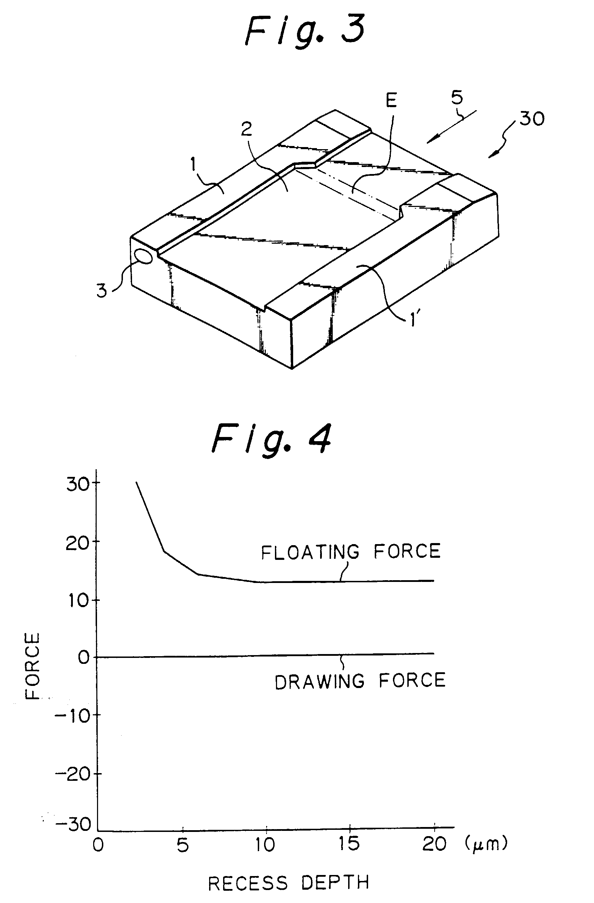

Figure 3 shows a tapered flat slider 30 as disclosed in United States Patent 4,734,803. Components similar to those shown in Figs. 1 and 2 are represented by the same reference numerals. The slider 30 has side rails 1 and 1', each of which narrow gradually in width along an intermediate portion of its length, so that the recess 2 therebetween widens gradually in width towards the trailing end of the slider, to define a negative pressure (drawing force) generating region E of the recess. The width of each side rail remains uniformly narrow from the trailing end of the said intermediate portion to the trailing end of the slider. However, since the leading ends of the side rails 1 and 1' are tapered, a relatively large floating force is generated when air flows in the direction of the arrow 5, and the negative pressure generated in the narrow region E is inadequate. In consequence, a flying height of 1 $\mu$m or less cannot readily be achieved.

Figure 4 is a chart showing the relationship between the depth of the recess 2 and the floating force and drawing force generated in the slider of Fig. 3. The drawing force generated by the slider of Fig. 3 is no more than about 0.033% of the floating force and, therefore, it is not possible to achieve the desired flying characteristics with such a head slider. When the depth of the recess 2 is reduced, the floating force generated is increased so as to make it impractical to reduce the depth of the recess to less than 10 $\mu$m. This creates difficulties in forming the recess, thus making it more difficult to manufacture the device.

To counter the drawbacks of such previously-proposed floating head sliders, a magnetic head slider has been considered in which the side rails do not have tapered sections (hereafter referred to as a "taperless slider"). This limits the generation of the floating force and enables a lowering of the flying height, so that a high speed access can be achieved.

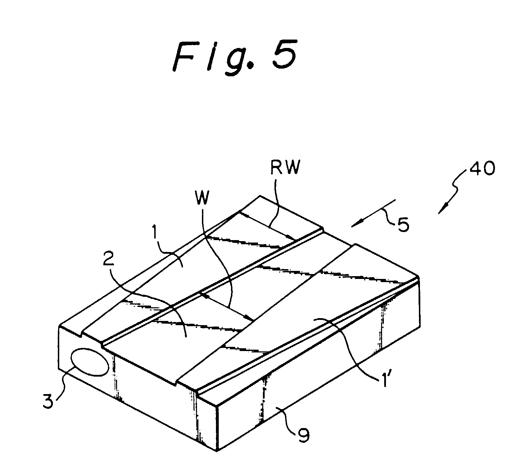

Figure 5 illustrates such a slider, components similar to those in the Figs. 1 and 2 being given the same reference numerals. The slider 40 in Fig. 5 has a pair of side rails 1 and 1' formed on a base surface of the body portion 9, which side rails do not have tapered sections formed at the front ends thereof. This base surface faces the recording surface of the disk when in use. The width of the side rails 1 and 1' is gradually made narrower from the air inlet side (leading end) to the air outlet side (trailing end), and accordingly, the width of the recess 2 is gradually increased so that it is wider at the air outlet end than at the air inlet end. The recess thus widens over the entire length of the slider 40, so that a negative pressure can be generated over the whole length of the recess. As in the foregoing examples, the magnetic head 3 is provided at the air outlet end (downstream side) face of the body portion 9.

When a taperless slider has side rails with a constant width RW, the distribution of the generated floating force is inclined towards the air outlet side. In contrast, the gradually reducing width RW of each of the side rails 1 and 1' of the slider 40 shown in Fig. 5 shifts the distribution of the generated floating force so as to move the centre of action of the floating force towards the centre of the slider 40. Furthermore, the generated floating force is much small than that generated by the tapered flat head slider described above and consequently the taperless slider ( of Fig. 5 can have a low flying height, and a smaller floating force, and thus can be used in devices having a high access speed.

Further, in contrast to the previously-proposed negative pressure head sliders, which generate negative pressure by varying the depth of the recess, the Fig. 5 embodiment generates negative pressure by varying the width of the recess. For example, when the edges of the recess 2, defined by respective edges of the side rails 1 and 1' are set at an angle of 60° relative to the longitudinal axis of the head slider 40, variations of the pressure become moderate and tend not to cause an accumulation of floating organic vapour or a deposition of the floating gas material.

JP-A-1-319188 discloses a slider, somewhat similar in configuration to that of Fig. 5, wherein a narrowing recess is formed in the inlet end of each of the side rails to provide a step bearing having side walls for resisting lateral outflow of the bearing fluid where it first encounters the side rails. This is not found to be necessary in an embodiment of the present invention.

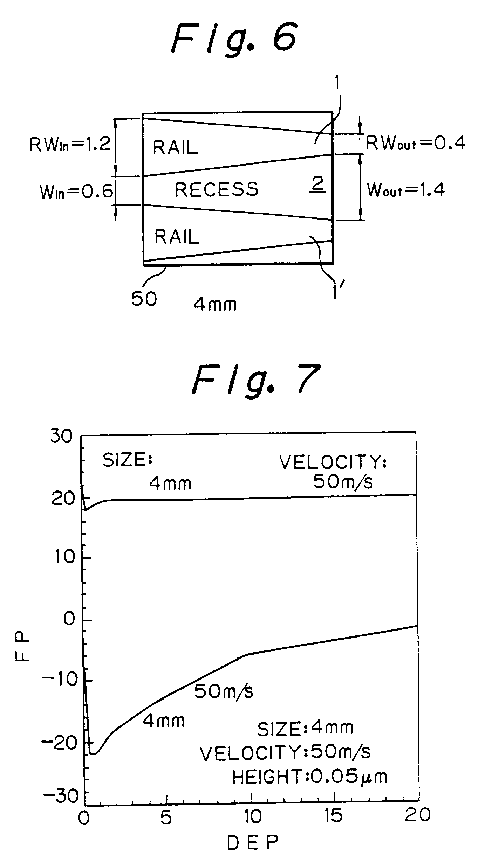

Figure 6 shows a practical example of a taperless slider 50, having side rails 1 and 1', similar to that shown in Fig. 5. In this example, the head slider 50 has a length of 4 mm. The width RWin of each of the side rails 1 and 1' at the leading (air inlet end) edge is 1.2 mm, and the width RWout at the trailing (air outlet end) edge is 0.4 mm. The width Win of the recess 2 at the leading edge is 0.6 mm, and the width Wout at the trailing edge is 1.4 mm. In a test, such a slider 50 was arranged at a position at which the peripheral speed of the magnetic disk was 50 m/s, and the flying conditions of the magnetic head at a flying height of 0.05 $\mu$m were measured. The result-

ant floating and drawing forces, relative to the depth of the recess 2, are shown in Fig. 7. The generated floating force, in the absence of any tapered section at the front end portions of the side rails 1 and 1', is less than or equal to 30% of that of a conventional, tapered head slider with side rails having constant width. Thus, whilst the widths of the side rails 1 and 1' are adequate, the rate of variation of the width of the recess is large enough to generate a sufficient amount of negative pressure. Furthermore, the depth of the recess 2 can be about 1μm and still generate a sufficient amount of negative pressure, which facilitates the production of the head slider. As can be seen from Fig. 7, the drawing force is decreased in magnitude by an increase of the depth of the recess 2, and at a depth of 6μm the drawing force of the recess 2 becomes approximately half the peak value. Therefore, to obtain a sufficient drawing force, the depth of the recess 2 should preferably be less than or equal to 6μm.

The slider 40 of Fig. 5 can be such that the centre of action of the negative (drawing force) is offset, towards the downstream end of the slider, from the centre of action of the floating force, as described below.

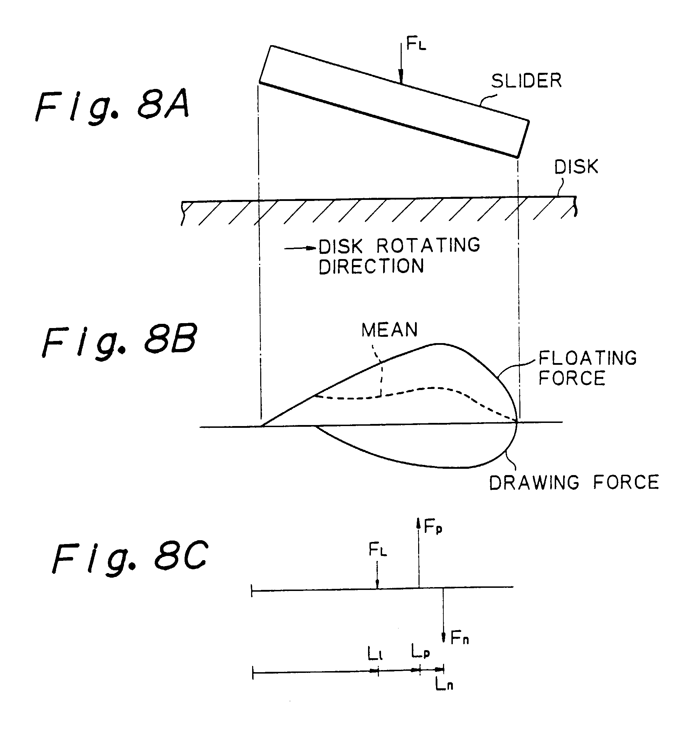

Fig. 8A schematically illustrates a magnetic disk and a slider flying above that disk. When the disk is driven in the direction indicated by the arrow, the slider flies in equilibrium between the upward floating force, exerted by the gaseous medium entrained between the disk and the slider, and the downward forces on the slider. The distributions of the floating and drawing forces beneath the slider are shown in Fig. 8B. Fig. 8C shows schematically the forces balanced in this condition, which can be expressed by the following equations:

$$F_P = F_L + F_n \qquad (1)$$

$$F_P \cdot L_P = F_L \cdot L_L + F_n \cdot L_n \qquad (2)$$

where $F_P$ is the upward pressure (floating force), $F_L$ is the downward load (depression force) of the slider, and $F_n$ is the downward drawing force generated under the slider. From the equations (1) and (2), the following equation can be derived.

$$L_L = L_P - (F_n \frac{L_n - L_P}{F_P - F_n}) \qquad (3)$$

$L_n$ being greater than $L_P$, equation (3) shows that $L_L$ must be less than $L_p$. Thus, the effect of having the drawing force offset, relative to the floating force, towards the downstream end of the slider is to shift the resultant generated force distribution (the mean distribution shown in Fig. 8B) towards the air inlet end (towards the centre of the slider) from the centre of action of the floating force $F_p$. As a result, the magnitude of the yawing of the slider upon access can be reduced. In this way a slider can be realised which has only a relatively small amount of yawing when accessing the disk, so that it can be used for high speed access. Such a design can also serves to avoid an increase of surface pressure caused by a reduction of the flying height and a lowering of the CSS strength.

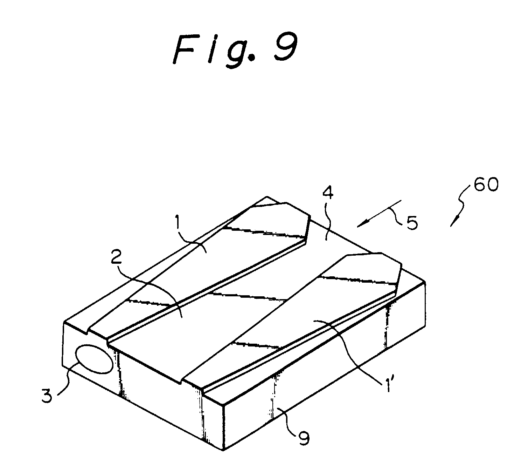

Figure 9 shows a taperless slider 60 embodying the present invention. In the drawing, portions similar to those shown in Fig. 5 are represented by the same reference numerals. In contrast to the slider of Fig. 5, each of the rails 1 and 1' of the Fig. 9 slider has a leading end part, at the air inlet end of the slider, that increases gradually in width, from an inlet end edge of the slider towards an outlet end edge thereof, so that the recess defined between the two rails 1 and 1' has a leading end portion 4 that reduces gradually in width from the said inlet end edge towards the said outlet end edge. This leading end portion 4 of the recess leads into a further portion 2 of the recess, which increases gradually in width towards the said outlet end edge.

The embodiment shown generates a positive pressure in the leading end portion 4 of the recess, thereby improving the pitching stability of the slider, which tends to be low in previously-considered flat plate type and crown-type head sliders. Also, the previously-considered problem of accumulation of floating organic vapour and deposition of floating gas tends to be avoided by the Fig. 9 construction.

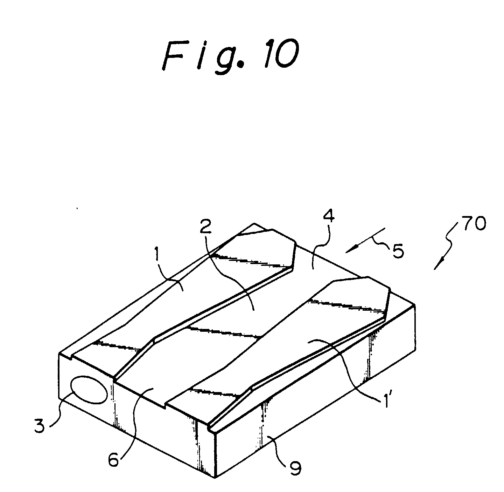

Figure 10 shows a second embodiment of the present invention. Portions similar to those shown in Fig. 9 are represented by the same reference numerals. Fig. 10 shows a slider 70 which differs from that of Fig. 9 in that each of the rails 1 and 1' has a trailing end part which widens gradually from an intermediate portion of the rail to the outlet end edge of the slider. Correspondingly, the recess in the Fig. 10 embodiment has a trailing end portion 6, which leads from the further portion 2 of the recess, and which narrows in width from the further portion 2 to the outlet end edge of the slider.

The Fig. 10 construction can provide the same advantages as the Fig. 9 embodiment. In addition, the Fig. 10 embodiment can increase the positive pressure force at the outlet end, which further improves the pitching stability. In addition, variations in the flying height, caused by variations of the yawing angle, can be reduced by setting the inclination angle of the side edges of the said further portion 2 of the recess, with respect to the longitudinal axis of the slider, to be greater than or equal to the maximum yawing angle of the slider as employed in a disk drive device.

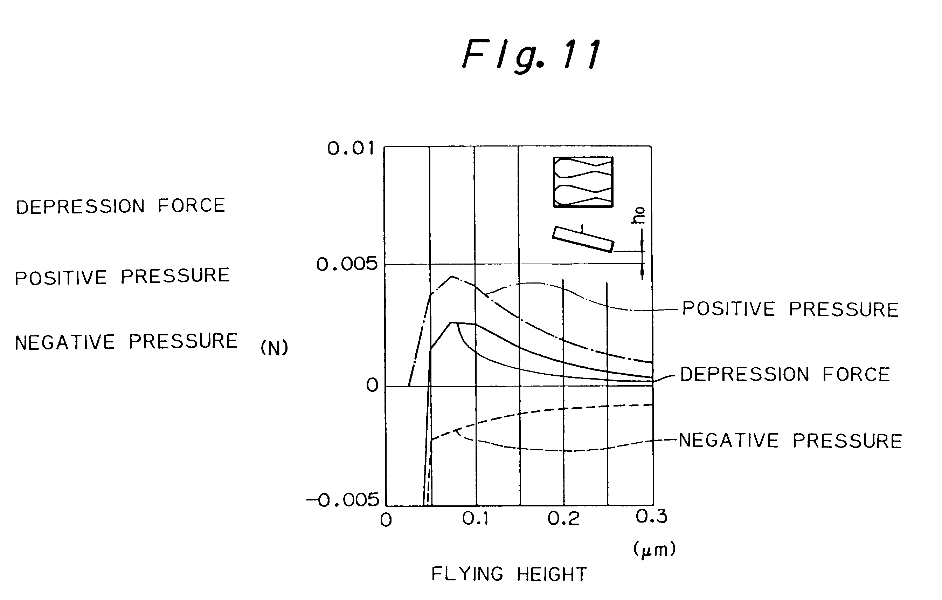

The principles of the first and second embodiments described above can be applied to a crown-type slider (a prior example of a crown-type slider is disclosed in JP-A-59-58661). When these embodiments are applied to a flat plate type slider, an unstable floating condition can arise depending upon the orientation of the loading position. Figure 11 shows relationship between the floating force (positive pressure), the drawing force (negative pressure), and a depression force (loading force) which is equal to the net upward force resulting from the floating and drawing forces, thus establishing a balanced attitude at the flying height shown along the horizontal axis. The centre of action of the depression force is at the centre of the head slider. In this example, when the flying height is low an unstable floating condition occurs in which, when the floating force is lowered, the required depression force (which equals the net force due to the floating and drawing forces) is also lowered.

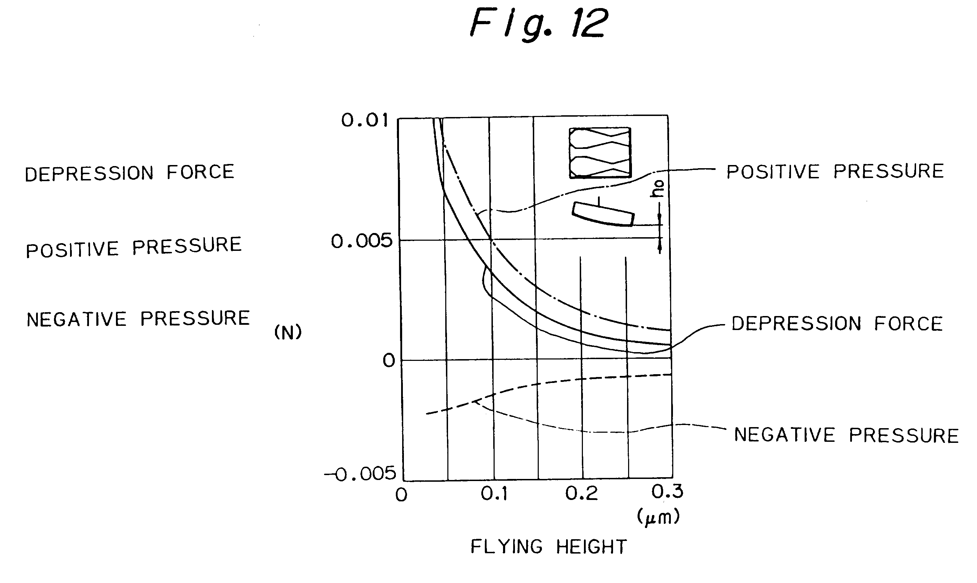

In comparison with such flat-plat type taperless sliders, a crown-type taperless slider, which has a slightly curved (to an amount of 10nm) floating surface facing the disk, can suppress instability of the floating attitude in the low flying height range by preventing a reduction of the elevation angle. Thus, the unstable floating problem can be resolved without a substantial increase of the flying height, as can be appreciated from Fig. 12.

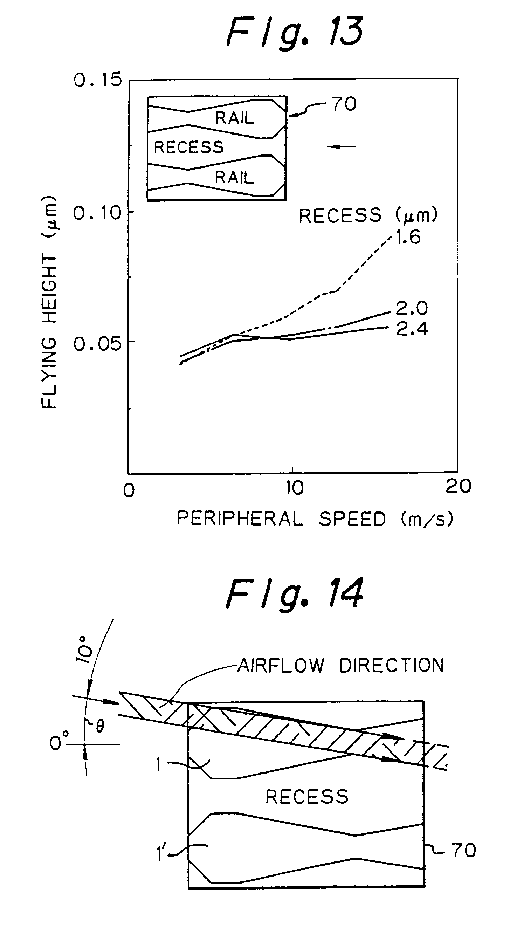

Figure 13 shows the relationship between the peripheral speed of the disk and the flying height when the depth of the recess is varied between 1.6μm, 2.0μm, and 2.4μm in the taperless slider 70 of Fig. 10. As can be seen from Fig. 13, the flying height, can be maintained substantially constant, regardless of the peripheral speed, by setting the depth of the recess to an optimum value.

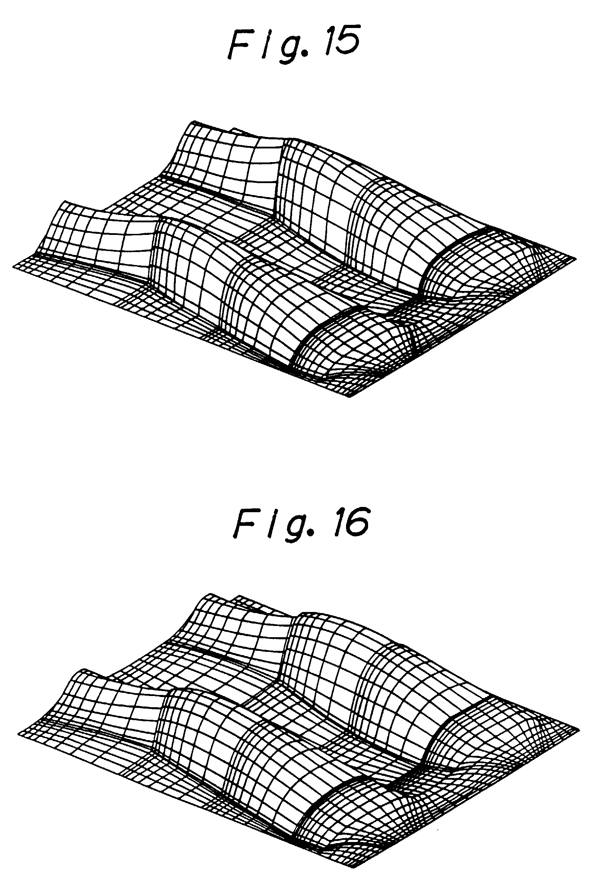

The reduction of variation in flying height with varying yawing angle will now be discussed with reference to Figs. 14 to 17. Figure 14 shows the air flow direction at a yawing angle of 10° (yawing angle of the longitudinal axis of the slider is 10°). In the taperless slider of Fig. 10, the configuration of the side rails 1 and 1' is designed to make the air flow at the air outlet end uniform, regardless of the yawing angle, with a view to minimising the effect of the yawing angle on the flying height. This will be further discussed with reference to Figs. 15 and 16. Figure 15 shows the pressure distribution over the floating surface of the taperless slider 70 of Fig. 10 at a yawing angle of 0°. As can be seen from Fig. 15, the maximum pressure is generated along respective centre lines of the side rails 1 and 1', and the minimum pressure is generated along the centre line of the recess between those rails. Figure 16 shows the pressure distribution on the taperless slider 70 of Fig. 10 at a yawing angle of 10°. By comparing these two pressure distribution charts, it can be seen that almost no variation is caused by the presence or absence of a yawing angle.

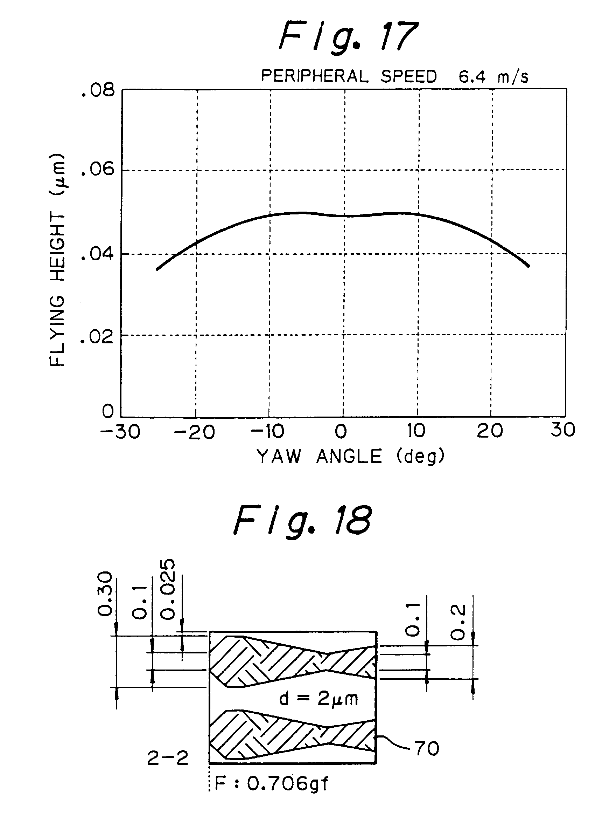

Figure 17 shows variations of the flying height of a crown-type taperless slider 70, having a crown-height of 10 mm and other dimensions as shown in Fig. 18, when the yawing angle varies within a range of ±30° at a peripheral speed of 6.4 m/s. From Fig. 17 it can be appreciated that the flying height can be maintained at a substantially constant value within a yawing angle range of ±10° when the slider is used under the conditions set out above. Thus the amount of air flow arriving at the trailing (outlet end) edge of the slider does not vary significantly with changes in the yawing angle of the slider if the angle between the longitudinal axis of the slider and the side edge of the further portion 2 of the recess, which widens gradually, is made grater than or equal to the maximum yawing angle of the slider as used in a disk drive device. Variation of flying height with variation of yawing angle can thereby be suppressed.

It should be noted that it is also possible to provide an outer recess or step along the outer side of the side rails 1 and 1', in order to optimise the position of the side rails 1 and 1'. This can reduce the amount of rolling of the slider due to variation of the yawing angle, to substantially zero.

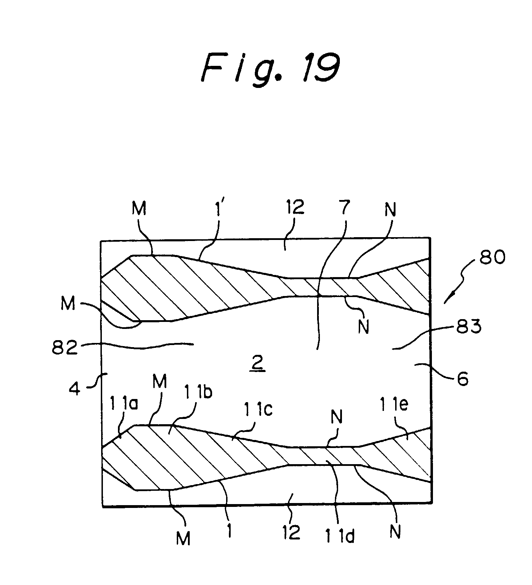

Figure 19 shows a third embodiment of the present invention. In this figure, portions similar to those of the taperless slider 70 as shown in Fig. 10 are presented by the same reference numerals. Fig. 19 shows a slider 80 having side rails 1 and 1', each of which has a first intermediate part 116, between widening leading end part 11a and narrowing further part 11c.

The side edges M of these first intermediate parts are substantially parallel to the longitudinal axis of the slider. Each of the rails 1 and 1' further also has a second intermediate part 11d, between the narrowing part 11c and the trailing end part 11e. The edges N of the second intermediate parts 11d are substantially parallel to the longitudinal axis of the slider. The second intermediate parts 11d define therebetween a constant-width intermediate portion 7 of the recess. With the illustrated construction, angles to be formed between the edges of the rails 1 and 1' and the longitudinal axis can be made grater than or equal to the maximum yawing angle of the apparatus in which the head slider is employed.

In this embodiment, at the upstream end of the trailing end part 11e of the side rails, the pressure of the flowing air can be maintained substantially at atmospheric pressure, regardless of the yaw angle, because of the presence of the constant-width recess portion bounded by the second intermediate portions 11d of the side rails. Also, the variation of the amount of air flow at the side rails 1 and 1' in accordance with the size of the yaw angle tends to be reduced by the effects of the angles of inclination of the sides of the leading end parts 11a and the trailing end parts 11e of the side rails 1 and 1'. The floating force can thereby be maintained at a substantially constant value regardless of the yawing angle. The reference number 12 denotes recesses formed outside of the side rails 1 and 1'. These recesses 12 enable the side rails 1 and 1' to be set at optimum positions, such that the amount of rolling of the slider caused by variations of the yawing angle is substantially zero.

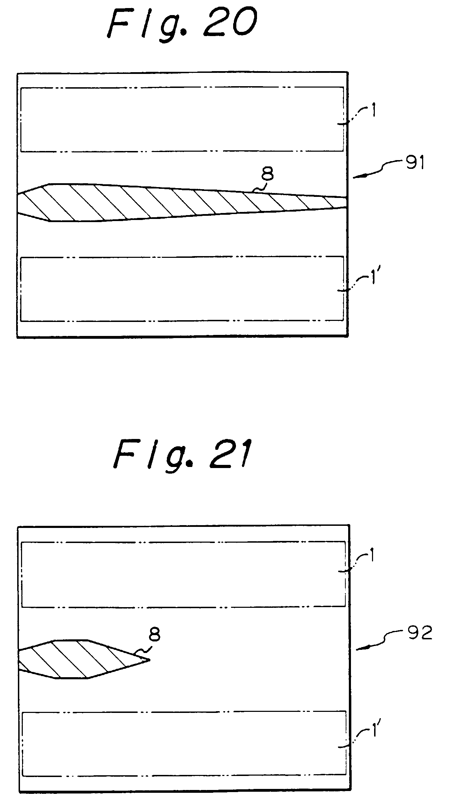

Figures 20 and 21 are underneath plan views of fourth and fifth embodiments of the present invention respectively. In Figs. 20 and 21, portions similar to those in the other embodiments are represented by the same reference numerals. Each of the sliders of Figs. 20 and 21 has side rails similar to those of previously described embodiments, but also has an intermediate rail 8, between the side rails 1 and 1'. This third rail 8 has a different configuration from the rails 1 and 1'. The third rail 8 is wider at the air inlet end than at the air outlet end. One or more such intermediate rails could be provided between the rails 1 and 1'. The third rail 8 need not extend along the entire length of the recess from the air inlet end edge to the air outlet end edge but may end at a location within the said further (widening) portion of the recess, as shown schematically in Fig. 21.

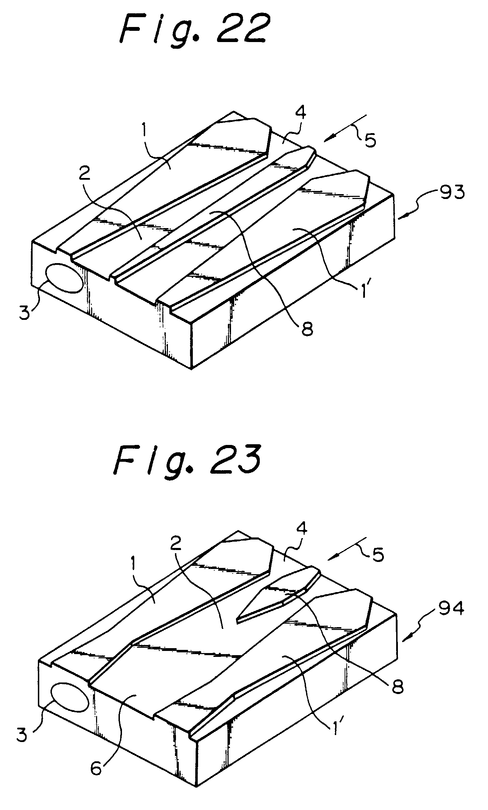

Figure 22 is a perspective view of a slider in which the third rail 8 of Fig. 20 is added to the embodiment of Fig. 9, and Fig. 23 is a perspective view of a slider in which the third rail of Fig. 21 is added to the slider of Fig. 10.

The advantages of the construction in which a third rail 8 is provided in the recess between the rail sections 1 and 1' are discussed below. In general, with such a negative pressure slider, it is preferable to maintain the ratio of the widths of the widening further portion 2 of the recess and the narrowing portion of the recess, in order to obtain sufficient negative pressure (drawing force). The widths of the rail sections 1 and 1' and of the recess should preferably be approximately equal to each other. However, in order to maintain the desired rolling stability of an air bearing, the slider width should increase in correspondence wire the slider size. Accordingly, in the case of a large size slider, wide rail section 1, 1' are necessary. Nevertheless, although the negative pressure (drawing force) produced by the slider increases in proportion to the square of the slider size, the floating force increases in proportion to the fourth power thereof. Accordingly, a slider configuration optimised for a particular size of slider will not be the optimum configuration for a slider of larger size, because the floating force generated by the larger slider becomes excessive.

In view of this problem, a third rail 8 may be provided in the recess between the side rails 1 and 1', instead of simply widening the side rails 1 and 1'. The floating force generated by the side rails 1 and 1' then increases in proportion to the third power of the width of the side rail. The addition of the third rail equivalent to dividing the rails 1 and 1' at the air inlet end, so as to maintain a sufficient width of the rail to ensure that a sufficient drawing force is generated in the recess whilst reducing the floating force generated. Furthermore, the third rail 8 need not extend over the entire length of the recess, but can terminate at an intermediate point. In such a case, the throttling effect used to generate the negative pressure (drawing force) in the recess may be increased. A slider design including a third rail 8 as described above can give high durability and floating stability, substantially regardless of the size of the slider.

## Claims

1. A magnetic disk drive comprising a floating head slider operatively mounted therein for supporting a magnetic read/write head in an operative disposition relative to a recording surface of a rotating magnetic record disk in a magnetic disk drive device, so as to be held away from that surface by pressure of air entrained by the rotating disk and flowing between the said recording surface and a floating surface of the slider, which floating surface faces the said recording surface when the slider is in use and extends, in the direction of flow of such air (5), from an inlet end edge of the slider to an outlet end edge thereof, wherein the said floating surface has the form of a flat base surface having thereon a pair of side rails (1,1'), each of which rails has a floating force generating surface that faces away from the said base surface and extends from the said inlet end edge to the said outlet end edge of the slider; characterised in that each of the said side rails (1,1') has a leading end part that increases gradually in width, from the said inlet end edge towards the said outlet end edge, followed by a further part that decreases in width towards the said outlet end edge, so that the said floating surface has a shallow recess (2,4), defined between the two side rails, having a leading end portion (4), that reduces gradually in width from the said inlet end edge towards the said outlet end edge, and a further portion (2) that increases gradually in width towards the said outlet end edge so as to form a negative force generating region of the floating surface.

2. A magnetic disk drive presenting all the features defined in claim 1 wherein said floating surface of the floating head slider has the form of a base surface that is curved slightly in the direction of the air flow, so as to appear convex when the slider is viewed in side elevation, instead of being flat.

3. A magnetic disk drive as claimed in claim 3, wherein each of the opposite side boundaries of the said further portion (2) of the recess, which boundaries are provided by respective side faces of the said further parts of the side rails (1,1'), extends at an angle to a central longitudinal axis of the slider that is greater than a maximum yawing angle of the slider as used in the disk drive device.

4. A magnetic disk drive as claimed in claim 1, 2, 3 or 4, wherein each of the said side rails has a trailing end part, following the said further part, which trailing end part increases gradually in width towards the said outlet end edge, so that the said recess has a trailing end portion (6) that decreases gradually in width towards the said outlet end edge.

5. A magnetic disk drive as claimed in claim 5 read as appended to claim 3, wherein each of the opposite side boundaries of the said trailing end portion (6) of the recess, which boundaries are provided by respective side faces of the said trailing end parts of the side rails (1,1'), extends at an angle to a central longitudinal axis of the slider that is greater than a maximum yawing angle of the slider as used in the disk drive device.

6. A magnetic disk drive as claimed in claims 5 or 6, wherein each of the said side rails has an intermediate part (11d), between the said further part and the said trailing end part, which intermediate part is constant in width so that the said recess, between the further portion (2) thereof and the trailing end portion thereof, has an intermediate portion (7) that is constant in width.

7. A magnetic disk drive as claimed in any preceding claim, wherein the depth of the said recess (2,4,6) is less than or equal to 6μm.

8. A magnetic disk drive as claimed in any preceding claim, wherein the said further portion (2) of the recess widens at an angle that is less than or equal to 60°.

9. A magnetic disk drive as claimed in any one of claims 1 to 8, wherein each of the opposite side boundaries of the said further portion (2) of the recess, which boundaries are provided by respective side faces of the said further parts of the side rails (1,1'), extends at an angle to a central longitudinal axis of the slider that is less than or equal to 30°.

10. A magnetic disk drive as claimed in any preceding claim, wherein the said side rails (1,1') are spaced inwardly from respective outermost side edges of the said base surface.

11. A magnetic disk drive as claimed in any preceding claim, wherein the respective floating force generating surfaces extend at a distance, from the said base surface, that is constant along the side rails.

12. A magnetic disk drive as claimed in any one of claims 1 to 11, wherein the respective floating force generating surfaces are curved slightly from one end of the side rails to the other, so as to appear convex when the slider is viewed in side elevation.

13. A magnetic disk drive as claimed in any preceding claim, wherein an intermediate rail (8) extends longitudinally, within the recess between the said side rails (1,1'), from the said inlet end edge towards the said outlet end edge.

14. A magnetic disk drive as claimed in claim 14, wherein the said intermediate rail (8) extends to the said outlet end edge.

15. A magnetic disk drive as claimed in claim 14, wherein the said intermediate rail (8) ends at a location within the said further portion (2) of the said recess.

**Patentansprüche**

1. Magnetplattenantrieb, umfassend einen darin betriebsmäßig montierten schwebenden Kopfschlitten zum Halten eines magnetischen Lese-/Schreibkopfes in einer Betriebsanordnung relativ zu einer Aufnahmeoberfläche einer rotierenden magnetischen Aufnahmeplatte in einer Magnetplatten-Antriebseinrichtung derart, daß er von dieser Oberfläche durch den Druck der Luft ferngehalten wird, die durch die rotierende Platte mitgenommen wird und zwischen dieser Aufnahmeoberfläche und einer Schwebeoberfläche des Schlittens strömt, wobei die Schwebeoberfläche der Aufnahmeoberfläche zugewandt ist, wenn der Schlitten im Gebrauch ist, und sich in der Richtung der Strömung dieser Luft (5) von einer Einlaßendkante des Schlittens bis zu einer Auslaßendkante desselben erstreckt, wobei die Schwebeoberfläche die Form einer flachen Basisoberfläche hat, auf der ein Paar Seitenschienen (1, 1') angeordnet ist und jede dieser Schienen eine eine Schwebekraft erzeugende Oberfläche hat, die von der Basisoberfläche fortweist und sich von der Einlaßendkante bis zu der Auslaßendkante des Schlittens erstreckt;

dadurch **gekennzeichnet,** daß jede der Seitenschienen (1, 1') einen Vorderendteil hat, welcher sich allmählich von der Einlaßendkante zu der Auslaßendkante hin in der Breite vergrößert, gefolgt von einem weiteren Teil, der zu der Auslaßendkante hin in der Breite abnimmt, so daß die Schwebeoberfläche eine flache Ausnehmung (2, 4) bildet, die zwischen den beiden Seitenschienen definiert ist und einen Vorderendabschnitt (4) hat, dessen Breite allmählich von der Einlaßendkante zu der Auslaßendkante hin reduziert ist, und einen weiteren Abschnitt (2), dessen Breite allmählich zu der Auslaßendkante hin in der Breite abnimmt, so daß eine eine negative Kraft erzeugende Region der Schwebeoberfläche gebildet wird.

2. Magnetplattenantrieb mit allen Merkmalen, die im Anspruch 1 dargelegt sind, bei welchem die Schwebeoberfläche des schwebenden Kopfschlittens die Form einer Basisfläche hat, die in der Richtung der Luftströmung leicht gekrümmt ist derart, daß sie konvex erscheint, wenn der Schlitten in einem Seitenaufriß betrachtet wird, anstatt flach zu sein.

3. Magnetplattenantrieb nach Anspruch 2, bei welchem jede der einander gegenüberliegenden Seitenbegrenzungen des weiteren Abschnittes (2) der Ausnehmung, die durch jeweilige Seitenflächen der weiteren Teile der Seitenschienen (1, 1') geschaffen werden, sich mit einem Winkel zu einer zentralen Längsachse des Schlittens erstrecken, welcher größer als ein maximaler Gierwinkel des Schlittens ist, wie er in der Plattenantriebseinrichtung verwendet wird.

4. Magnetplattenantrieb nach Anspruch 1, 2, oder 3, bei welchem jede der Seitenschienen einen hinteren Endteil aufweist, welcher auf den weiteren Teil folgt, wobei der hinteren Endteil allmählich in der Breite zu der Auslaßendkante hin zunimmt, so daß die Ausnehmung einen hinteren Endabschnitt (6) hat, der allmählich in der Breite zu der Auslaßendkante hin abnimmt.

5. Magnetplattenantrieb nach Anspruch 4 und kombiniert mit Anspruch 2, bei welchem jede der einander gegenüberliegenden Seitenbegrenzungen des hinteren Endabschnittes (6) der Ausnehmung, welche Begrenzungen durch jeweilige Seitenflächen der hinteren Endteile der Seitenschienen (1, 1') geschaffen werden, sich mit einem Winkel zu einer zentralen Längsachse des Schlittens erstrecken, welcher größer als ein maximaler Gierwinkel des Schlittens ist, wie er in der Plattenantriebseinrichtung verwendet wird.

6. Magnetplattenantrieb nach den Ansprüchen 4 oder 5, bei welchem jede der Seitenschienen einen Zwischenteil (IId) zwischen dem weiteren Teil und dem hinteren Endteil hat, welcher Zwischenteil in seiner Breite konstant ist, so daß die Ausnehmung zwischen dem weiteren Abschnitt (2) desselben und dem hinteren Endabschnitt desselben einen Zwischenabschnitt (7) hat, welcher in seiner Breite konstant ist.

7. Magnetplattenantrieb nach einem der vorangehenden Ansprüche, bei welchem die Tiefe der Ausnehmung (2, 4, 6) kleiner als oder gleich 6 μm ist.

8. Magnetplattenantrieb nach einem der vorangehenden Ansprüche, bei welchem der weitere Abschnitt (2) der Ausnehmung sich mit einem Winkel verbreitert, welcher kleiner als oder gleich 60° ist.

9. Magnetplattenantrieb nach einem der Ansprüche 1 bis 8, bei welchem jede der einander gegenüberliegenden Seitenbegrenzungen des weiteren Abschnittes (2) der Ausnehmung, welche Begrenzungen durch entsprechende Seitenflächen der weiteren Teile der Seitenschienen (1, 1') geschaffen werden, sich mit einem Winkel zu einer zentralen Längsachse des Schlittens erstrecken, welcher kleiner als oder gleich 30° ist.

10. Magnetplattenantrieb nach einem der vorangehenden Ansprüche, bei welchem die Seitenschienen (1, 1') von den jeweiligen äußersten Seitenkanten der Basisoberfläche nach innen hin beabstandet sind.

11. Magnetplattenantrieb nach einem der vorangehenden Ansprüche, bei welchem jeweilige eine Schwebekraft erzeugende Oberflächen sich mit einem Abstand von der Basisoberfläche erstrecken, der entlang der Seitenschienen konstant ist.

12. Magnetplattenantrieb nach einem der Ansprüche 1 bis 11, bei welchem die jeweiligen die Schwebekraft erzeugenden Oberflächen von einem Ende der Seitenkanten zu dem anderen leicht gekrümmt sind derart, daß sie konvex erscheinen, wenn der Schlitten in einem Seitenaufriß betrachtet wird.

13. Magnetplattenantrieb nach einem der vorangehenden Ansprüche, bei welchem eine Zwischenschiene (8) sich innerhalb der Ausnehmung zwischen den Seitenschienen (1, 1') in Längsrichtung von der Einlaßendkante zu der Auslaßendkante hin erstreckt.

14. Magnetplattenantrieb nach Anspruch 13, bei welchem die Zwischenschiene (8) sich bis zu der Auslaßendkante erstreckt.

15. Magnetplattenantrieb nach Anspruch 14, bei welchem die Zwischenschiene (8) an einem Punkt innerhalb des weiteren Abschnittes (2) der Ausnehmung endet.

**Revendications**

1. Unité de disque magnétique comprenant un coulisseau flottant de tête monté dans l'unité pendant le fonctionnement et destiné à supporter une tête magnétique de lecture-écriture avec une position de travail par rapport à une surface d'enregistrement d'un disque magnétique rotatif d'enregistrement dans une unité de disque magnétique, afin qu'il soit maintenu à distance de la surface par la pression de l'air entraîné par le disque tournant et s'écoulant entre la surface d'enregistrement et une surface de flottement du coulisseau, cette surface de flottement étant tournée vers la surface d'enregistrement lorsque le coulisseau est utilisé et s'étendant, dans la direction d'écoulement de cet air (5), d'un bord d'extrémité d'entrée du coulisseau à un bord d'extrémité de sortie de celui-ci, dans laquelle la surface de flottement a la forme d'une surface plate de base ayant une paire de rails latéraux (1, 1'), chacun des rails ayant une surface génératrice d'une force de flottement qui est tournée du côté opposé à la surface de base et qui est disposée du bord d'extrémité d'entrée au bord d'extrémité de sortie du coulisseau,

caractérisée en ce que chacun des rails latéraux (1, 1') a une partie d'extrémité avant dont la largeur augmente progressivement, du bord d'extrémité d'entrée vers le bord d'extrémité de sortie, suivie par une partie supplémentaire dont la largeur diminue vers le bord d'extrémité de sortie, si bien que la surface de flottement a une cavité peu profonde (2, 4) délimitée entre les deux rails latéraux, ayant une partie d'extrémité avant (4) dont la largeur diminue progressivement du bord d'extrémité d'entrée vers le bord d'extrémité de sortie, et une partie supplémentaire (2) dont la largeur augmente progressivement vers le bord d'extrémité de sortie pour la formation d'une région génératrice d'une force négative à la surface de flottement.

2. Unité de disque magnétique ayant toutes les propriétés de la revendication 1, dans laquelle la surface de flottement du coulisseau flottant de tête a la forme d'une surface de base qui est légèrement courbée dans la direction d'écoulement de l'air, si bien qu'elle apparaît convexe lorsque le coulisseau est vu en élévation latérale au lieu d'être plat.

3. Unité de disque magnétique selon la revendication 2, dans laquelle chacune des limites latérales opposées de la partie supplémentaire (2) de la cavité, ces limites ayant des faces latérales respectives des parties supplémentaires des rails latéraux (1, 1'), fait un angle avec l'axe longitudinal central du coulisseau, cet angle étant supérieur à un angle maximal de lacet du coulisseau utilisé dans l'unité de disque.

4. Unité de disque magnétique selon la revendication 1, 2 ou 3, dans laquelle chacun des rails latéraux a une partie d'extrémité arrière qui suit la partie supplémentaire, la partie d'extrémité arrière ayant une largeur qui augmente progressivement vers le bord d'extrémité de sortie, si bien que la cavité a une partie d'extrémité arrière (6) dont la largeur diminue progressivement vers le bord d'extrémité de sortie.

5. Unité de disque magnétique selon la revendication 4 lorsqu'elle dépend de la revendication 3, dans laquelle chacune des limites latérales opposées de la partie d'extrémité arrière (6) de la cavité, ces limites étant formées par des faces latérales respectives des parties d'extrémité arrière des rails latéraux (1, 1'), forme un angle avec l'axe longitudinal central du coulisseau qui est supérieur à un angle maximal de lacet du coulisseau utilisé dans l'unité de disque.

6. Unité de disque magnétique selon la revendication 4 ou 5, dans laquelle chacun des rails latéraux a une partie intermédiaire (11d) comprise entre la partie supplémentaire et la partie d'extrémité arrière, la partie intermédiaire ayant une largeur constante si bien que la cavité, entre la partie supplémentaire (2) de celle-ci et sa partie d'extrémité arrière, possède une partie intermédiaire (7) dont la largeur est constante.

7. Unité de disque magnétique selon l'une quelconque des revendications précédentes, dans laquelle la profondeur de la cavité (2, 4, 6) est inférieure ou égale à 6 μm.

8. Unité de disque magnétique selon l'une quelconque des revendications précédentes, dans laquelle la partie supplémentaire (2) de la cavité s'élargit suivant un angle qui est inférieur ou égal à 60°.

9. Unité de disque magnétique selon l'une quelconque des revendications 1 à 7, dans laquelle chacune des limites latérales opposées de la partie supplémentaire (2) de la cavité, ces limites étant formées par les faces latérales respectives des parties supplémentaires des rails latéraux (1, 1'), forme un angle avec l'axe longitudinal central du coulisseau qui est inférieur ou égal à 30°.

10. Unité de disque magnétique selon l'une quelconque des revendications précédentes, dans laquelle les rails latéraux (1, 1') sont placés vers l'intérieur à distance des bords latéraux les plus externes respectifs de la surface de base.

11. Unité de disque magnétique selon l'une quelconque des revendications précédentes, dans laquelle les surfaces respectives génératrices de la force de flottement sont disposées, depuis la surface de base, sur une distance qui est constante le long des rails latéraux.

12. Unité de disque magnétique selon l'une quelconque des revendications 1 à 10, dans laquelle les surfaces respectives génératrices d'une force de flottement sont légèrement recourbées d'une extrémité des rails latéraux vers l'autre, afin qu'elles paraissent convexes lorsque le coulisseau est vu en élévation latérale.

13. Unité de disque magnétique selon l'une quelconque des revendications précédentes, dans laquelle un rail intermédiaire (8) est disposé longitudinalement, dans la cavité comprise entre des rails latéraux (1, 1'), du bord d'extrémité d'entrée vers le bord d'extrémité de sortie.

**14.** Unité de disque magnétique selon la revendication 13, dans laquelle le rail intermédiaire (8) s'étend vers le bord d'extrémité de sortie.

**15.** Unité de disque magnétique selon la revendication 13, dans laquelle le rail intermédiaire (8) aboutit à un emplacement qui se trouve dans la partie supplémentaire (2) de la cavité.

# Fig. 1

# Fig. 2

# Fig. 3

# Fig. 4

# F I g. 5

# Fig. 6

RWin=1.2
Win=0.6

RAIL

RECESS    2

RAIL

RWout=0.4
Wout=1.4

50        4mm        1'

# Fig. 7

SIZE:
4mm

VELOCITY:
50m/s

50m/s

4mm

SIZE:4mm
VELOCITY:50m/s
HEIGHT:0.05μm

FP

DEP

**F i g. 8A**

**F i g. 8B**

**F i g. 8C**

# Fig. 9

# Fig. 10

# Fig. 11

DEPRESSION FORCE

POSITIVE PRESSURE

NEGATIVE PRESSURE (N)

0.01

0.005

0

-0.005

POSITIVE PRESSURE

DEPRESSION FORCE

NEGATIVE PRESSURE

0    0.1    0.2    0.3

(μm)

FLYING HEIGHT

EP 0 466 502 B1

# Fig. 12

DEPRESSION FORCE

POSITIVE PRESSURE

NEGATIVE PRESSURE (N)

FLYING HEIGHT

EP 0 466 502 B1

## Fig. 13

## Fig. 14

F I g. 15

F I g. 16

## Fig. 17

PERIPHERAL SPEED 6.4 m/s

## Fig. 18

# Fig. 19

## F I g. 20

## F I g. 21

# Fig. 22

# Fig. 23